# EUROPÄISCHE PATENTANMELDUNG

(11) **EP 1 837 605 A2**
(43) Veröffentlichungstag der Anmeldung: **26.09.2007**
(21) Anmeldenummer: 07090004.8
(22) Anmeldetag: 17.01.2007
(51) Int. Cl.: F24D 19/08

(54) **Ventil, insbesondere Heizkörperventil für Warmwasser-Heizungsanlagen**

(30) Priorität: 22.03.2006 DE 102006013993
(71) Anmelder: KERMI GmbH, 94447 Plattling (DE)
(72) Erfinder: Hofinger, Roland, 94469 Deggendorf (DE); Blab, Reinhard, 94481 Grafenau (DE)
(74) Vertreter: Patentanwälte Bressel und Partner

(57) **Zusammenfassung**

Ventil, insbesondere Heizkörperventil für Warmwasser-Heizungsanlagen, bestehend aus einem in einem Gehäuse (10) angeordneten Ventilkörper (1), vorzugsweise einer Mitnahme (2), zwei Anschlusskanälen für den Zu- und Abfluss, einem Ventilsitz und einem von außen zu betätigenden, durch eine Feder (5) belasteten, den Ventilsitz überlappenden Verschlussstück, welches über eine Ventilspindel (3) betätigt wird, wobei im Ventil Mittel zur Entlüftung des Heizkörpers vorgesehen sind.

## Beschreibung

Die Erfindung betrifft ein Ventil, insbesondere Heizkörperventil für Warmwasser-Heizungsanlagen mit im Ventil integrierten Mitteln zur Entlüftung des Heizkörpers.

Ventile, insbesondere Heizkörpereinbauventil für Warmwasser-Heizungsanlagen gemäß dem Oberbegriff des Anspruchs 1 sind hinlänglich bekannt. Derartige Ventile werden beispielsweise in den Druckschriften DE 199 44 365 B4, DE 82 17 528 U1 und DE 44 02 752 A1 beschrieben. Diese Ventile dienen der Regelung des Druckes und der Durchflussrichtung des Heizmediums im Heizkörper. Aus keiner der Druckschriften ist es bekannt, dass diese Ventile auch zur erforderlichen Entlüftung des Heizkörpers geeignet sind. Dafür werden in Regel gesonderte Entlüfterköpfe vorgesehen, die in eine am Heizkörper angeordnete Buchse oder in ein Rohr des Heizkörpers einschraubbar sind. Derartige Entlüfterköpfe sind allgemein bekannt und werden beispielsweise in den Druckschriften EP 1 512 916 A2, DE 103 41 058 B3 und DE 198 17 106 A1 beschrieben. Sie werden zur Entlüftung von Heizkörpern eingesetzt um überschüssige Luft aus der Heizungsanlage ablassen zu können. Ansammlungen von Luft können die Strömungen des Heizmediums behindern oder unterbrechen. Die Luft verursacht neben diesen Störungen im Heizmediumkreislauf auch Korrosion und unerwünschte Geräusche. Um die Luft aus dem Heizkörper entfernen zu können verfügen die Entlüfterköpfe über einen Ventilkörper, der manuell betätigt werden kann. Die Entlüfterköpfe werden in eine Buchse oder in ein Rohr des Heizkörpers eingeschraubt und stehen dabei meist über die äußeren Randflächen der Buchse oder des Rohres hervor. Neben dem dafür erforderlichen zusätzlichen Platzbedarf, ist dies insbesondere bei Designheizkörpern auch aus optischen Gründen unerwünscht, weil zur Betätigung des Entlüfterkopfes dieser meist mit einem nach außen offenen Werkzeughohlprofil mit einem Innensechskant versehen ist.

Die Aufgabe der Erfindung besteht deshalb darin eine Vorrichtung zu entwickeln, die unabhängig von der Bauart des Heizkörpers die Entlüftung desselben ermöglicht, ohne das äußere Erscheinungsbild des Heizkörpers zu beeinflussen.

Diese Aufgabe wird erfindungsgemäß durch ein Ventil nach Anspruch 1 gelöst. Vorteilhafte Ausgestaltungen und Weiterbildungen der Erfindung ergeben sich aus den jeweils zugehörigen abhängigen Ansprüchen.

Besonders wesentlich bei der erfindungsgemäßen Lösung ist es, dass in einem Ventil, insbesondere einem Heizkörperventil für Warmwasser-Heizungsanlagen, Mittel zur Entlüftung des Heizkörpers angeordnet sind.
Der Hauptvorteil liegt dabei darin, dass die Entlüftungsfunktion in eine ohnehin am Heizkörper vorhandene Vorrichtung integriert wird. Zusätzliche Öffnungen an Buchsen oder Rohren des Heizkörpers zum Einbau eines Entlüfterkopfes sind nicht mehr erforderlich. Das optische Erscheinungsbild des Heizkörpers wird dadurch nicht beeinträchtigt im Gegensatz zu den bisherigen Entlüfterköpfen.
Eine besonders vorteilhafte Ausführung der Erfindung ergibt sich daraus, dass die Ventilspindel des Heizkörpereinbauventils funktional als Entlüftungsventil ausgebildet ist.

Gemäß einer Variante dieser Ausführung weist die Ventilspindel dabei eine Durchgangsbohrung auf, wobei auf einer Seite der Ventilspindel in der Durchgangsbohrung eine Entlüftungsspindel verstellbar angeordnet ist und im abgedichteten Zustand die Durchgangsbohrung durch die Entlüftungsspindel verschließbar ist. Die Entlüftung erfolgt dabei durch Aufdrehen der Entlüftungsspindel, wobei die Luft über die Durchgangsbohrung und die Entlüftungsspindel austritt.

Nach einer weiteren Variante dieser Ausführung ist die Ventilspindel mit einer Querbohrung versehen, wobei an einer Seite der Ventilspindel innerhalb der Ventilspindel eine Entlüftungsspindel integriert ist, wobei im abgedichteten Zustand die Querbohrung durch die Entlüftungsspindel verschließbar ist. Die Entlüftung erfolgt hier ebenfalls durch Aufdrehen der Entlüftungsspindel, wobei die Luft über die Querbohrung austritt.

Gemäß einer weiteren Variante ist die Ventilspindel zur Ausbildung eines Überströmbereiches mit einer Abflachung und einer Überströmnut versehen. Der Überströmbereich gelangt erst durch Ziehen an der Ventilspindel unter eine äußeren Dichtring, so dass die Luft über die Überströmnut austreten kann. Nach Loslassen der Ventilspindel wird diese durch eine Gegenfeder wieder in die Regelposition zurückgedrückt.

Nach einer anderen Ausführung ist auf einer Seite der Ventilspindel ein Überstromkanal vorgesehen, der aus einer axialen Sacklochbohrung und zwei Querbohrungen in der Ventilspindel gebildet wird, wobei die offene Seite der Sacklochbohrung mit einem Stopfen abgedichtet ist.
Erst durch Ziehen an Ventilspindel gelangt eine Bohrung des Überstromkanals außerhalb eines äußeren Dichtrings, so dass die Luft über den Überstromkanal entweichen kann. In der Regelstellung ist die Ventilspindel durch den äußeren Dichtring gegen einen Medienaustritt abgedichtet. Nach Loslassen der Ventilspindel wird diese durch eine Gegenfeder wieder in die Regelposition zurückgedrückt.

Gemäß einer weiteren Variante der Erfindung weist die Ventilspindel eine im Verschlussstück auslaufende Sacklochbohrung auf, die am Ende der Bohrung mit einer Querlochbohrung in Verbindung steht, wobei die Ventilspindel in der Regelstellung durch einen äußeren Dichtring gegen einen Medienaustritt abgedichtet ist. Erst durch Ziehen an der Ventilspindel gelangt die Querlochbohrung außerhalb des äußeren Dichtrings, wobei die Luft dann über die Sacklochbohrung und die Querlochbohrung entweichen kann. Nach Loslassen der Ventilspindel wird diese durch eine Gegenfeder wieder in die Regelposition zurück gedrückt.

Gemäß einer anderen bevorzugten Ausführung der Erfindung ist zwischen Gehäuse und Mitnahme mindestens eine Abdichtung vorgesehen, die in einer in der Mitnahme eingebrachten umlaufenden Nut angeordnet ist. Im Gehäuse und in der umlaufenden Nut der Mitnahme sind Vertiefungen eingebracht, die beim Drehen der Mitnahme in die Entlüftungsstellung zusammentreffen und die Dichtwirkung der Abdichtung aufheben. Die Luft kann dabei über den fertigungstechnisch- und funktionsbedingten Spalt zwischen Ventilkörper und Mitnahme entweichen.

Gemäß einer weiteren bevorzugten Ausführung der Erfindung sind im Gehäuse und in der Mitnahme sich gegenüberliegende radiale Bohrungen angeordnet, wobei die Bohrung im Gehäuse als radiale Sackloch-Bohrung ausgebildet ist, die mit einer axialen Sackloch-Bohrung in Verbindung steht und in der axialen Sackloch-Bohrung eine Entlüftungsspindel angeordnet ist. Die Mitnahme ist dabei gegenüber dem Gehäuse durch eine äußere Dichtung abgedichtet. Die Entlüftung erfolgt hier durch Aufdrehen der Entlüftungsspindel, wobei die Luft über die radiale Sackloch-Bohrung und die axiale Sackloch-Bohrung austritt.

Nach einer weiteren Ausführungsform der Erfindung ist vorgesehen, dass der Ventilkörper äußere Gewindenuten aufweist und darüber in das Gehäuse ein- bzw. ausschraubbar ist, wobei der Ventilkörper mit einer äußeren Abdichtung im Gehäuse abgedichtet ist. Die Entlüftung erfolgt durch "teilweises Herausschrauben" des Ventilkörpers aus dem Ventilgehäuse, wobei nach Aufheben der Dichtwirkung die Luft direkt über die Gewindenuten entweichen kann.

Gemäß einer weiteren Ausführungsform der Erfindung ist eine mit der Mitnahme dicht verschraubbare Stopfbuchse vorgesehen, wobei das Ventil durch Lösen der Verschraubung zwischen Mitnahme und Stopfbuchse entlüftbar ist. Die Luft kann dabei über die Gewinde von Mitnahme und Stopfbuchse, sowie dem fertigungstechnisch und funktionsbedingten Spalt zwischen Ventilkörper und Stopfbuchse entweichen.

Die Erfindung wird im Folgenden anhand bevorzugter Ausführungsbeispiele in Verbindung mit der Zeichnung näher beschrieben.
Die Ausführungsbeispiele zeigen jeweils ein Heizkörpereinbauventil V für Warmwasser-Heizungsanlagen, welches aus einem in einem Gehäuse (10) angeordneten Ventilkörper (1), einer Mitnahme (2), zwei Anschlusskanälen 4 für den
Zu- und Abfluss, einem Ventilsitz 6 und einem von außen zu betätigenden, durch eine Regelfeder (5) belasteten, den Ventilsitz 6 überlappenden Verschlussstück 7, welches über eine Ventilspindel (3) betätigt wird. Je nach Ausführung sind dabei im Ventil V verschiedene Varianten bzw. Mittel zur Entlüftung des Heizkörpers vorgesehen.

Eine bevorzugte Variante der Erfindung besteht darin, dass die Ventilspindel 3 funktional als Entlüftungsventil ausgebildet ist, wobei diese Variante wiederum diverse Ausführungen umfasst.

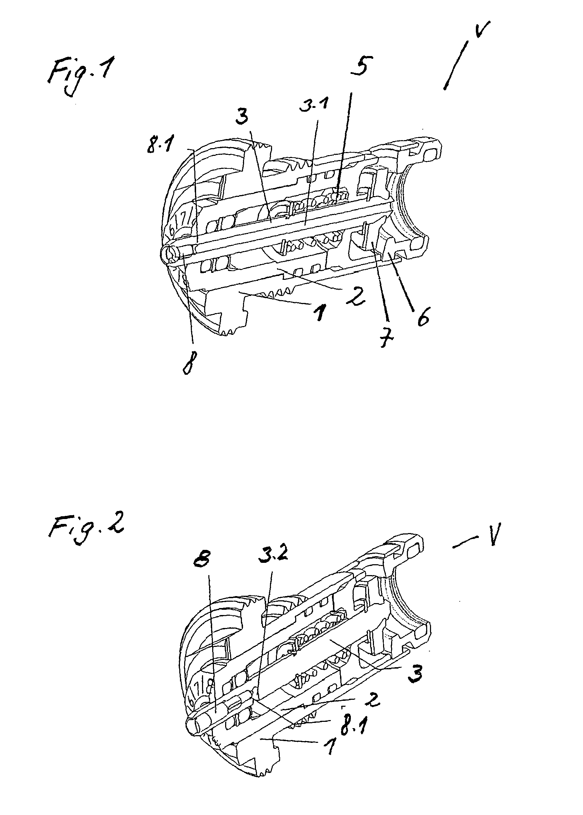

In der Fig. 1 ist ein Ventil V mit einer Ventilspindel (3) dargestellt, die eine Durchgangsbohrung (3.1) aufweist, wobei auf einer Seite der Ventilspindel (3) innerhalb der Durchgangsbohrung (3.1) eine verstellbare Entlüftungsspindel (8) angeordnet ist. Im abgedichteten Zustand ist die Durchgangsbohrung (3.1) durch die Entlüftungsspindel 8 verschließbar. Die Entlüftung erfolgt durch Aufdrehen der Entlüftungsspindel 8. Die Luft tritt über die Durchgangsbohrung (3.1) und die Entlüftungsspindel 8 aus. Zum Abdichten nach dem Entlüften verschließt die Entlüftungsspindel 8 den Sitz 8.1 in der Ventilspindel 3.

In der Fig. 2 ist ein Ventil V mit einer Ventilspindel (3) dargestellt, die eine Querbohrung (3.2) aufweist. Die auf einer Seite der Ventilspindel (3) ist eine Entlüftungsspindel 8 angeordnet. Im abgedichteten Zustand ist die Querbohrung (3.2) durch die Entlüftungsspindel 8 verschließbar. Wie beim Ausführungsbeispiel gemäß der Fig. 1 erfolgt die Entlüftung durch Aufdrehen der Entlüftungsspindel 8. Die Luft tritt über die Querbohrung (3.2) aus. Zum Abdichten nach dem Entlüften verschließt die Entlüftungsspindel 8 den Sitz 8.1 in der Ventilspindel (3) vor der Querbohrung (3.2).

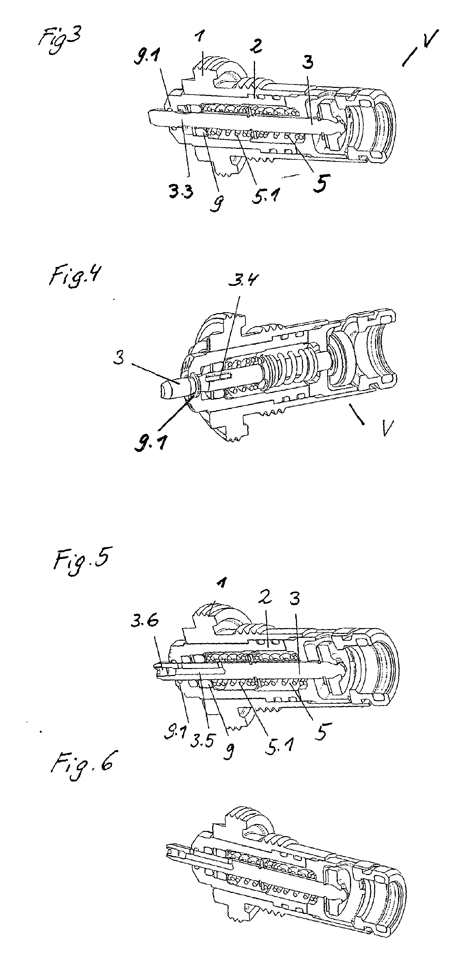

In der Fig. 3 ist ein Ventil V mit einer Ventilspindel (3) in der Regelstellung dargestellt, die zur Ausbildung eines Überströmbereiches mit einer Abflachung (3.3) und einer Überströmnut (3.4) versehen ist. Die Ventilspindel (3) wird in der Regelstellung durch einen äußeren Dichtring 9.1 gegen einen Medienaustritt abgedichtet. Neben der Regelfeder (5) ist eine Gegenfeder 5.1 vorgesehen. Durch die Gegenfeder 5.1 wird sichergestellt, dass auch bei abmontiertem Thermostatkopf oder ähnlichen Reglern, die Ventilspindel (3) durch die Regelfeder (5) nicht aus der Regelstellung in die Entlüftungsstellung gedrückt wird. Erst durch Ziehen an der Ventilspindel (3) kommt der Überströmbereich unter den äußeren Dichtring 9.1 und die Luft kann über die Überströmnut (3.4) und die Abflachung (3.3) entweichen. Durch Loslassen der Ventilspindel (3) wird diese durch die Gegenfeder 5.1wieder in die Regelstellung gedrückt. In der Fig. 4 ist die Entlüftungsstellung des Ventils dargestellt.

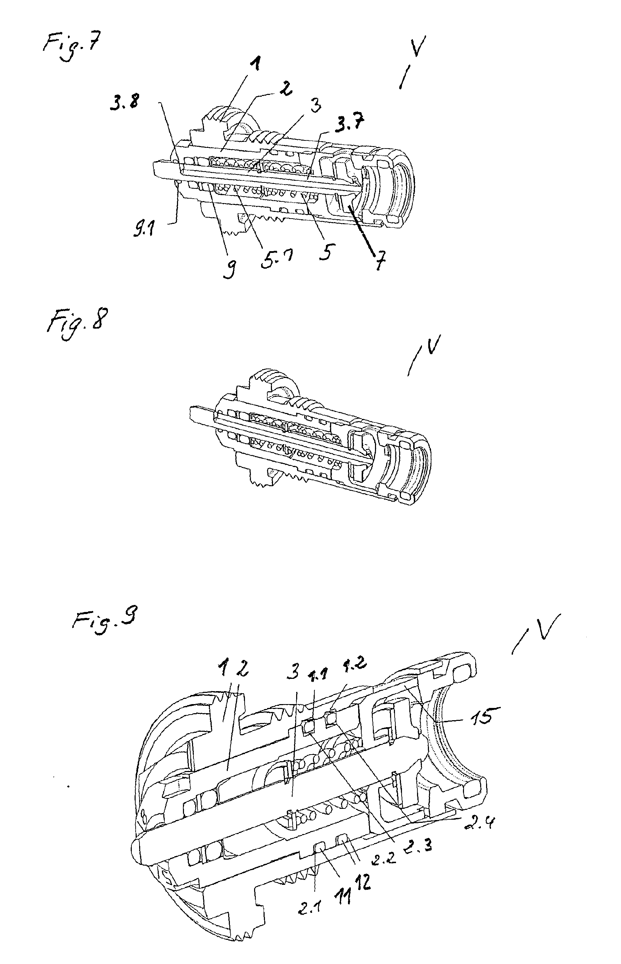

In der Fig. 5 ist ein Ventil V in Regelstellung mit einer Ventilspindel (3) dargestellt, in welcher auf einer Seite ein Überstromkanal (3.5) vorgesehen ist, der aus einer axialen Sacklochbohrung und zwei Querbohrungen innerhalb der Ventilspindel (3) gebildet wird. Die offene Seite der Sacklochbohrung ist mit einem Stopfen 3.6 abdichtbar. Neben der Regelfeder (5) ist auch bei dieser Ausführung eine Gegenfeder 5.1 vorgesehen. In der Regelstellung wird ein Medienaustritt durch einen äußeren Dichtring 9.1 verhindert. Durch die Gegenfeder 5.1 wird verhindert, dass auch bei abmontiertem Thermostatkopf oder ähnlichen Reglern, die Ventilspindel (3) durch die Regelfeder (5) nicht aus der Regelstellung in die Entlüftungsstellung gedrückt wird. In der Fig. 6 ist diese Variante in der Entlüftungsstellung dargestellt.

In der Fig. 7 ist ein Ventil in der Regelposition mit einer Ventilspindel (3) dargestellt, die eine im Verschlussstück 7 auslaufende Sacklochbohrung 3.7 aufweist, die am Ende der Bohrung mit einer Querlochbohrung 3.8 in Verbindung steht. In der Regelstellung ist die Ventilspindel (3) durch einen äußeren Dichtring 9.1 gegen einen Medienaustritt abgedichtet. Durch die Gegenfeder 5.1 wird wieder verhindert, dass auch bei abmontiertem Thermostatkopf oder ähnlichen Reglern, die Ventilspindel (3) durch die Regelfeder (5) nicht aus der Regelstellung in die Entlüftungsstellung gedrückt wird. Erst durch Ziehen an der Ventilspindel (3) kommt die Querlochbohrung 3.8 außerhalb des äußeren Dichtrings 9.1 und die Luft kann über die Sacklochbohrung 3.7 und die Querlochbohrung 3.8 entweichen. Durch Loslassen der Ventilspindel 3 wird diese durch die Gegenfeder 5.1 wieder in die Regelstellung des Ventils gedrückt. In der Fig. 8 ist diese Variante in der Entlüftungsstellung dargestellt.

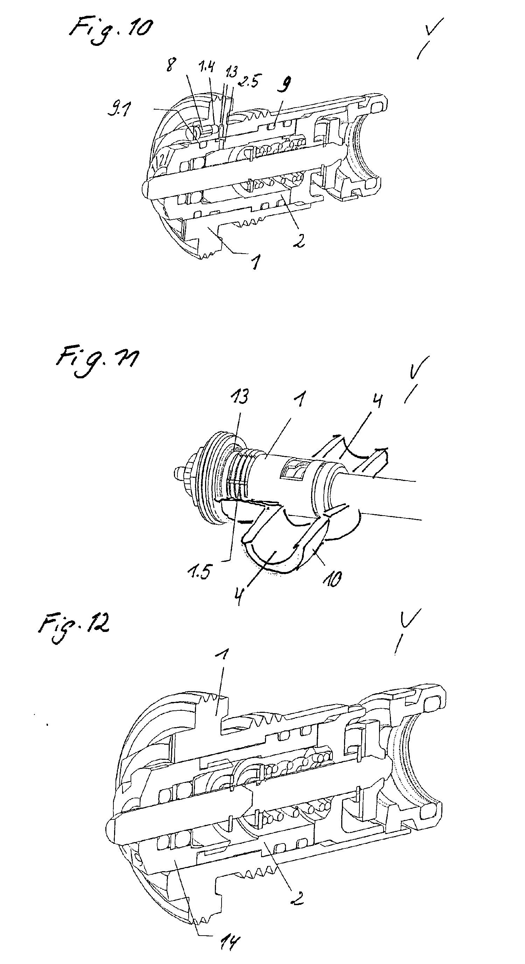

Die Fig. 9 zeigt eine weitere Ausführungsform der Erfindung. Bei voreinstellbaren Ventilen werden die Durchflusswerte durch gemeinsames Drehen der Mitnahme 2 und der Regelkulisse 15 verändert. Zwischen dem Ventilkörper (1) und der Mitnahme (2) sind die Abdichtungen 11,12 vorgesehen, die in in der Mitnahme (2) eingebrachten umlaufende Nuten 2.1, 2.2 angeordnet sind. Im Ventilkörper (1) und in der umlaufenden Nut 2.1, 2.2 der Mitnahme (2) sind die Vertiefungen 1.1, 1.2, 2.3, 2.4 eingebracht, die beim Drehen der Mitnahme (2) in die Entlüftungsstellung zusammentreffen und die Dichtwirkung der Abdichtungen 11,12 aufheben. Nur in der Entlüftungsstellung liegen die Vertiefungen 1.1, 1.2, 2.3, 2.4 sich gegenüber und heben die Vorspannung der Abdichtungen 11, 12 auf. Die Luft kann über den fertigungs- und funktionsbedingten Spalt zwischen Ventilkörper 1 und Mitnahme 2 entweichen.

In der Fig. 10 ist ein Ventil V dargestellt, bei dem im Ventilkörper (1) und in der Mitnahme (2) sich gegenüberliegende radiale Bohrungen 1.3, 2.5 angeordnet sind. Die Bohrung 1.3 ist im Ventilkörper (1) als radiale Sackloch-Bohrung ausgebildet, die mit einer axialen Sackloch-Bohrung (1.4) in Verbindung steht, wobei in der axialen Sackloch-Bohrung (1.4) eine Entlüftungsspindel (8) sitzt. Die Mitnahme (2) ist gegenüber dem Ventilkörper (1) durch eine äußere Dichtung 9.1 abgedichtet.
Die Entlüftung erfolgt durch Aufdrehen der Entlüftungsspindel (3). Die Luft tritt über die Bohrungen 1.3 und 1.4 aus. Zum Abdichten nach dem Entlüften verschließt die Entlüftungsspindel (8) den Sitz 8.1 im Ventilkörper 1. Der innere Dichtring 9 hat bei dieser Ausführung keine Dichtfunktion.

In der Fig. 11 ist ein Ventil V dargestellt, bei dem der Ventilkörper (1) äußere Gewindenuten 1.5 aufweist und darüber in das Gehäuse (10) ein- bzw. ausschraubbar ist. Der Ventilkörper (1) ist mit einer äußeren Abdichtung 13 im Gehäuse (10) abgedichtet. Die Entlüftung erfolgt durch teilweises Herausschrauben des Ventilkörpers 1 aus dem Gehäuse (10), wobei nach Aufheben der Dichtwirkung der äußeren Abdichtung 13 über die Gewindenuten 1.5 die Luft direkt entweichen kann. Ohne die Gewindenuten 1.5 müsste die Luft über das Gewinde entweichen, was zu einer unkontrollierten Entlüftung mit der Gefahr eines starken Austritts des Heizmediums führt.

In der Fig. 12 ist ein Ventil V dargestellt, bei dem eine mit der Mitnahme (2) dicht verschraubbare Stopfbuchse 14 vorgesehen ist und das Ventil durch Lösen der Verschraubung zwischen Mitnahme (2) und Stopfbuchse 14 entlüftbar ist. Die Luft kann über das Gewinde von Mitnahme (2) und Stopfbuchse 14, sowie dem fertigungs- und funktionsbedingten Spalt zwischen Ventilkörper 1 und Stopfbuchse 14 entweichen.

### Bezugszeichenliste

- V: Ventil
- 1: Ventilkörper
- 1.1: Vertiefungen
- 1.2: Vertiefungen
- 1.3: radiale Bohrung
- 1.4: axiale Bohrung
- 1.5: äußere Gewindenut
- 2: Mitnahme
- 2.1: umlaufender Nut
- 2.2: umlaufender Nut
- 3.: Ventilspindel
- 3.1: Durchgangsbohrung
- 3.2: Querbohrung
- 3.3: Abflachung
- 3.4: Überstromnut
- 3.5: Überstromkanal
- 3.6: Stopfen
- 3.7: Sackloch-Bohrung
- 3.8: Querlochbohrung
- 4: Anschlusskanäle
- 5: Regelfeder
- 6: Ventilsitz
- 7: Verschlussstück
- 8: Entlüftungsspindel
- 8.1: Sitz Entlüftungsspindel
- 9: innerer Dichtring
- 9.1: äußerer Dichtring
- 10: Gehäuse
- 11: Abdichtung
- 12: Abdichtung
- 13: äußere Dichtung
- 14: Stopfbuchse
- 15: Regelkulisse

## Patentansprüche

1. Ventil, insbesondere Heizkörperventil für Warmwasser-Heizungsanlagen, bestehend aus einem in einem Gehäuse (10) angeordneten Ventilkörper (1), vorzugsweise einer Mitnahme (2), zwei Anschlusskanälen (4) für den Zu- und Abfluss, einem Ventilsitz (6) und einem von außen zu betätigenden, durch eine Regelfeder (5) belasteten, den Ventilsitz (6) überlappenden Verschlussstück (7), welches über eine Ventilspindel (3) betätigt wird, **dadurch gekennzeichnet, dass** im Ventil (V) Mittel zur Entlüftung des Heizkörpers vorgesehen sind.

2. Ventil nach Anspruch 1, **dadurch gekennzeichnet, dass** die Ventilspindel (3) funktional als Entlüftungsventil ausgebildet ist.

3. Ventil nach den Ansprüchen 1 und 2, **dadurch gekennzeichnet, dass** die Ventilspindel (3) eine Durchgangsbohrung (3.1) aufweist und auf einer Seite Ventilspindel (3) in der Durchgangsbohrung (3.1) eine Entlüftungsspindel (8) verstellbar angeordnet ist, wobei im abgedichteten Zustand die Durchgangsbohrung (3.1) durch die Entlüftungsspindel (8) verschließbar ist.

4. Ventil nach den Ansprüchen 1 und 2, **dadurch gekennzeichnet, dass** die Ventilspindel (3) eine Querbohrung (3.2) aufweist und auf einer Seite der Ventilspindel (3) in der Ventilspindel (3) eine Entlüftungsspindel (8) vorgesehen ist, wobei im abgedichteten Zustand die Querbohrung (3.2) durch die Entlüftungsspindel (8) verschließbar ist.

5. Ventil nach den Ansprüchen 1 und 2, **dadurch gekennzeichnet, dass** die Ventilspindel (3) zur Ausbildung eines Überströmbereiches mit einer Abflachung (3.3) und einer Überströmnut (3.4) versehen ist.

6. Ventil nach den Ansprüchen 2 und 5, **dadurch gekennzeichnet, dass** neben der Regelfeder (5) eine Gegenfeder (5.1) vorgesehen ist.

7. Ventil nach einem der Ansprüche 2, 5 oder 6, **dadurch gekennzeichnet, dass** die Ventilspindel (3) in der Regelstellung durch einen äußeren Dichtring (9.1) gegen einen Medienaustritt abgedichtet ist.

8. Ventil nach den Ansprüchen 1 und 2, **dadurch gekennzeichnet, dass** auf einer Seite der Ventilspindel (3) ein Überstromkanal (3.5) vorgesehen ist, der aus einer axialen Sacklochbohrung und zwei Querbohrungen in der Ventilspindel (3) gebildet wird, wobei die offene Seite der Sacklochbohrung mit einem Stopfen (3.6) abdichtbar ist.

9. Ventil nach den Ansprüchen 2 und 8, **dadurch gekennzeichnet, dass** neben der Regelfeder (5) eine Gegenfeder (5.1) vorgesehen ist.

10. Ventil nach einem der Ansprüche 2, 8 oder 9, **dadurch gekennzeichnet, dass** die Ventilspindel (3) in der Regelstellung durch einen äußeren Dichtring (9.1) gegen einen Medienaustritt abgedichtet ist.

11. Ventil nach den Ansprüchen 1 und 2, **dadurch gekennzeichnet, dass** die Ventilspindel (3) eine im Verschlussstück (7) auslaufende Sacklochbohrung (3.7) aufweist, die am Ende der Bohrung mit einer Querlochbohrung (3.8) in Verbindung steht und die Ventilspindel (3) in der Regelstellung durch einen äußeren Dichtring (9.1) gegen einen Medienaustritt abgedichtet ist.

12. Ventil nach Anspruch 1, **dadurch gekennzeichnet, dass** zwischen Ventilkörper (1) und Mitnahme (2) mindestens eine Abdichtung (11, 12) vorgesehen ist, die in einer in der Mitnahme (2) eingebrachten umlaufenden Nut (2.1, 2.2) angeordnet ist, wobei im Ventilkörper (1) und in der umlaufenden Nut (2.1, 2.2) der Mitnahme (2) Vertiefungen (1.1, 1.2, 2.3, 2.4) eingebracht sind, die beim Drehen der Mitnahme (2) in die Entlüftungsstellung zusammentreffen und die Dichtwirkung der Abdichtung (11, 12) aufheben.

13. Ventil nach Anspruch 12, **dadurch gekennzeichnet, dass** in der Entlüftungsstellung die Vertiefungen (1.1, 1.2, 2.3, 2.4) sich gegenüberliegen und die Vorspannung der Abdichtung (11,12) aufheben.

14. Ventil nach Anspruch 1, **dadurch gekennzeichnet, dass** im Ventilkörper (1) und in der Mitnahme (2) sich gegenüberliegende radiale Bohrungen (1.3, 2.5) angeordnet sind, wobei die Bohrung (1.3) im Ventilkörper (1) als radiale Sackloch-Bohrung ausgebildet ist, die mit einer axialen Sackloch-Bohrung (1.4) in Verbindung steht, wobei in der axialen Sackloch-Bohrung (1.4) eine Entlüftungsspindel (8) sitzt.

15. Ventil nach Anspruch 14, **dadurch gekennzeichnet, dass** die Mitnahme (2) gegenüber dem Ventilkörper (1) durch eine äußere Dichtung (9.1) abgedichtet ist.

16. Ventil nach Anspruch 1, **dadurch gekennzeichnet, dass** der Ventilkörper (1) äußere Gewindenuten (1.5) aufweist und darüber in das Gehäuse (10) ein- bzw. ausschraubbar ist, wobei der Ventilkörper (1) mit einer äußeren Abdichtung (13) im Gehäuse (10) abgedichtet ist.

17. Ventil nach Anspruch 1, **dadurch gekennzeichnet, dass** eine mit der Mitnahme (2) dicht verschraubbare Stopfbuchse (14) vorgesehen ist und das Ventil (V) durch Lösen der Verschraubung zwischen Mitnahme (2) und Stopfbuchse (14) entlüftbar.
